# EUROPEAN PATENT APPLICATION

(11) **EP 4 496 194 A1**
(43) Date of publication of application: **22.01.2025**
(21) Application number: 23186140.2
(22) Date of filing: 18.07.2023
(51) Int. Cl.: H02K 15/00, H02K 3/487, H02K 3/34

(54) **SPACER FOR A STATOR FOR AN ELECTRIC MOTOR OF A VEHICLE**

(71) Applicant: Volvo Car Corporation, 405 31 Göteborg (SE)
(72) Inventor: CUNHA, Henrique, 405 31 Göteborg (SE); BARCK, Christoffer, 405 31 Göteborg (SE); VESTERBERG, Irina, 405 31 Göteborg (SE); LJUNGQVIST, Morgan, 405 31 Göteborg (SE)
(74) Representative: Maiwald GmbH

(57) **Abstract**

The disclosure relates to a spacer (10) for a stator (20) for an electric motor of a vehicle, the spacer (20) being configured to be inserted into a slot (21) of the stator (20) and adjacent to a stator winding (22) at least partially inserted into the slot (21), the spacer (10) being configured to space away the stator winding (22) from an inner side (24) of the stator (20), the spacer (10) comprising at least one bulge (14, 18) for guiding or locking the spacer (10) inside the slot (21).

## Description

### TECHNICAL FIELD

The present disclosure relates to a spacer for a stator for an electric motor of a vehicle, a stator for an electric motor of a vehicle and a method for manufacturing a stator.

### BACKGROUND ART

In a known configuration of a stator for an electric motor of a vehicle, the stator comprises several slots, inside of which the stator winding is arranged, e.g., with hairpins of the stator winding being arranged inside the slots.

### SUMMARY

It is an object of the present disclosure to improve the design of a stator. In particular, it is desirable to reduce the temperature of the stator during operation of the electric motor.

The object is at least partially solved by the subject matter of the independent claims of the present disclosure, wherein further examples are incorporated in the dependent claims.

According to a first aspect of this disclosure, there is provided a spacer for a stator for an electric motor of a vehicle, the spacer being configured to be inserted into a slot of the stator and adjacent to a stator winding at least partially inserted into the slot, the spacer being configured to space away the stator winding from an inner side of the stator, the spacer comprising at least one bulge for guiding or locking the spacer inside the slot.

The spacer proposed by this disclosure allows to space away the stator winding from an inner side of the stator or, in other words, from a center of the electric motor or from a rotor, when the stator is coupled with the rotor of the electric motor. By spacing apart the stator winding, it has been found that the stator temperature may be significantly reduced such that an acceptable level of stator temperature may be achieved when operating the electric motor having the stator using several spacers of the first aspect. In particular, temperature reductions in the range of 50 to 150 °C, for example 90 °C, may be achieved by using the spacers of the first aspect of this disclosure.

The slots in the stator, when the spacer and the stator winding are arranged therein, may be filled with a filling material, which may be a resin material, which is cured after filling it inside the slots. The filling material fixates the stator winding and the spacer in its respective positions after assembly. In this regard, the spacer of this disclosure has the advantage that it optimizes the fill out of the slot with the filling material. Specifically, the spacer helps in filling out the slot with the stator winding, thereby making empty spaces inside the slot smaller and more difficult for the resin material to leak out before the resin material is cured.

The spacer may be positioned inside the slot closer to the inner side of the stator or, in other words, closer to the center of the electric motor, when the stator is being used therein, than to an opposite, outer side of the stator. The stator winding on the other hand, may be positioned in the slot such that the spacer is positioned between the stator winding and the inner side of the stator. Accordingly, the spacer may space away the stator winding from the inner side of the stator towards the outer side of the stator. Thereby, the stator winding is moved relatively towards the outer side of the stator, in effect reducing the temperature of the stator in operation of the electric motor, as has been found by the inventors of the present disclosure.

The stator winding may comprise multiple hairpins, for example. In such a hairpin design, multiple hairpins may be at least partially inserted into the slot. In particular, multiple hairpins may be at least partially inserted into multiple slots of the stator, and each one of the slots may have a spacer according to the first aspect of this disclosure inserted therein. Thereby, multiple or all hairpins of the stator winding may be moved towards the outer side of the stator. Inside the slot, the spacer may be adjacent to the hairpins.

The spacer may alternatively be referred to as a wedge, as it may be used as a wedge between the inner side of the stator and the stator winding. Also, as described below, it may be locked or, in other words, wedged, inside the slot, thereby further adding to the function of a wedge.

According to an example, at least one of the at least one bulge may be a locking bulge configured for locking the spacer inside the slot by establishing a press-fit with the slot. The width or diameter of the spacer at the location of the at least one locking bulge may be larger than a corresponding with or diameter of the slot inside the stator such that the press-fit is established when inserting the spacer in the slot.

According to an example, the at least one locking bulge may be arranged at a second end portion of the spacer, the second end portion being located opposite of a first end portion of the spacer, the first end portion being configured to be inserted into the slot first. Accordingly, when the spacer is inserted into the slot, the at least one locking bulge is inserted last, thereby allowing the spacer to be inserted into the slot with ease and without damage to the spacer despite it having the at least one locking bulge.

According to an example, the spacer may comprise at least two locking bulges arranged opposite of one another. In particular, each one of the two locking bulges may be arranged on one of two opposite sides of the spacer. The two opposite sides may be smaller in width than two other opposite sides adjacent the opposite sides having the locking bulges. In other words, the locking bulges may be arranged on narrow sites of the spacer. The advantage of having two locking bulges is that the insertion of the spacer into the slot is facilitated and the locking is improved.

The at least one locking bulge may be designed in the shape or form of a bulb, for example. Accordingly, the bulb shaped locking bulge may extend from its narrow side over to the wider side of the spacer, for example.

In an example, at least one of the at least one bulge may be a guiding bulge configured for guiding the spacer inside the slot. The guiding bulge may in particular ensure that the spacer stays in correct position during the assembly process of the stator, for example, does not tilt. The width or diameter of the spacer at the location of the at least one locking bulge may be increased compared to the adjacent area of the spacer, but still smaller than a corresponding with or diameter of the slot inside the stator such that no press-fit is established when inserting the spacer in the slot but the guiding bulge comes into contact with the slot when the positioning is off during insertion, thereby guiding the spacer into the correct position.

In an example, the at least one guiding bulge may be arranged at a first end of the spacer, the first end being configured to be inserted into the slot first. Thereby, the guiding by the at least one guiding bulge may be used during the entire or almost entire insertion process of the spacer into the slot, making the assembly easier.

In an example, the spacer may comprise at least two guiding bulges arranged opposite of one another. In particular, each one of the two guiding bulges may be arranged on one of two opposite sides of the spacer. The two opposite sides may be smaller in width than two other opposite sides adjacent the opposite sides having the guiding bulges. In other words, the guiding bulges may be arranged on narrow sites of the spacer. The advantage of having two guiding bulges is that the insertion of the spacer into the slot is facilitated by the guiding provided thereby along two opposite sides of the spacer.

In an example, the spacer may comprise a visual indication indicating which one of two ends of the spacer is to be inserted first into the slot. The visual indication may in particular be arranged at one or both ends of the spacer.

In an example, the visual indication may be configured as a cut-out at one of the two ends of the spacer. The cut-out may be easily identified. In particular, the cut-out may be arranged at the second end of the spacer. Thereby, when the spacer has been inserted into the slot, it may be visually inspected whether the cut-out is visible. If the cut-out is visible, it may be confirmed that the spacer has been inserted into the slot correctly.

According to an example, one end of the spacer may be chamfered. The chamfered end may in particular be the first end of the spacer. The chamfering of the first end improves the insertion process of the spacer, in particular in the beginning, into the slot.

In an example, the spacer may be an injection molded part. Accordingly, the spacer may be produced very cost-effectively.

In an example, the spacer may be made from fiber-reinforced plastic material. The plastic material is not only cost-effective but may also withstand the high temperatures in the stator, be resistant against oil in the electric motor and is compatible with a filling material to be filled into the slot, e.g., a resin material. The spacer may be non-magnetic. In other words, the fibers and plastic material are non-magnetic. Thereby, the electromagnetic fields inside the electric motor are not influenced or disturbed by the spacer.

According to a second aspect of this disclosure, there is provided a stator for an electric motor of a vehicle, the stator comprising an inner side, an outer side, multiple slots at the inner side, and a stator winding at least partially arranged inside the slots, the stator further comprising spacers according to the first aspect of this disclosure, each one of the spacers being inserted into one of the multiple slots.

In an example, the spacers and stator winding are at least partially fixed inside the slots by a cured resin material inside the slots. The resin material after curing fixates the spacers and stator winding inside the slot such that they do not get lose during operation of the electric motor comprising the stator.

According to a third aspect, there is provided a method for manufacturing a stator according to the second aspect of this disclosure, the method comprising:
- inserting each one of the spacers into one of the multiple slots inside the stator,
- arranging the stator winding at least partially inside the slots,
- filling the slots with the therein inserted spacers and at least partially arranged stator winding with a resin material, and
- curing the resin material.

According to a further aspect, there may be provided an electric motor comprising a rotor and a stator according to the second aspect of this disclosure.

According to yet another aspect, there may be provided a vehicle, in particular a passenger vehicle, comprising the electric motor of the further aspect of this disclosure.

It is noted that the above examples may be combined with each other irrespective of the aspect involved. Accordingly, the method may be combined with structural features and, likewise, the spacer and stator may be combined with features described above with regard to the method.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a step of manufacturing a stator according to a method of this disclosure;
- Figure 2: shows a portion of the stator of Fig. 1 after the step of Fig. 1;
- Figure 3: shows a spacer as inserted into a slot of the stator of Figs. 1 and 2;
- Figure 4: shows a first end portion of the spacer in detail;
- Figure 5: shows a second end portion of the spacer in detail;
- Figure 6: shows a portion of the stator of Fig. 2 after another step of the method of Fig. 1; and
- Figure 7: shows a detail of the stator of Fig. 6.

### DETAILED DESCRIPTION

The Figures are merely schematic representations and serve only to illustrate examples of the disclosure. Identical or equivalent elements are in principle provided with the same reference signs.

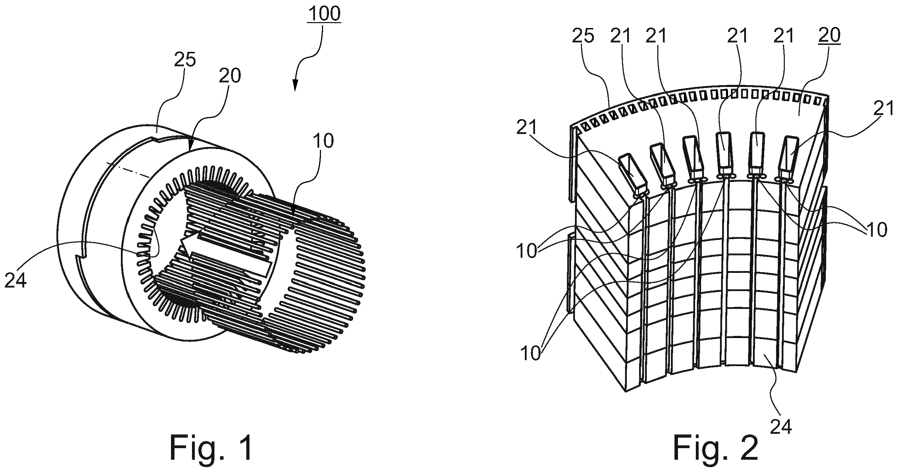

Figure 1 shows a step of manufacturing a stator 20 according to a method 100 for manufacturing the stator 20, wherein Fig. 1 is a perspective view of the stator 20 and multiple spacers 10. For example, the stator 20 may be configured for an electric motor for an electrical rear axle drive of a vehicle. The number of spacers 10 in the stator 20 may be 48, for example. Correspondingly, there may be 48 slots 21 in the stator 20.

In the step of method 100 shown in Fig. 1, the multiple spacers 10 are inserted into respective slots 21 inside the stator 20 as indicated by an arrow. The slots 21 are arranged at an inner side 24 of the stator 20, which is opposite of an outer side 25 of the stator 20. The slots 21 and the spacers 10 have a longitudinal extension.

Figure 2 shows a perspective view of a portion of the stator 20 after the spacers 10 have been inserted in the respective slots 21 and before a stator winding 22 has at least partially been arranged inside the slots 21 with its hairpins.

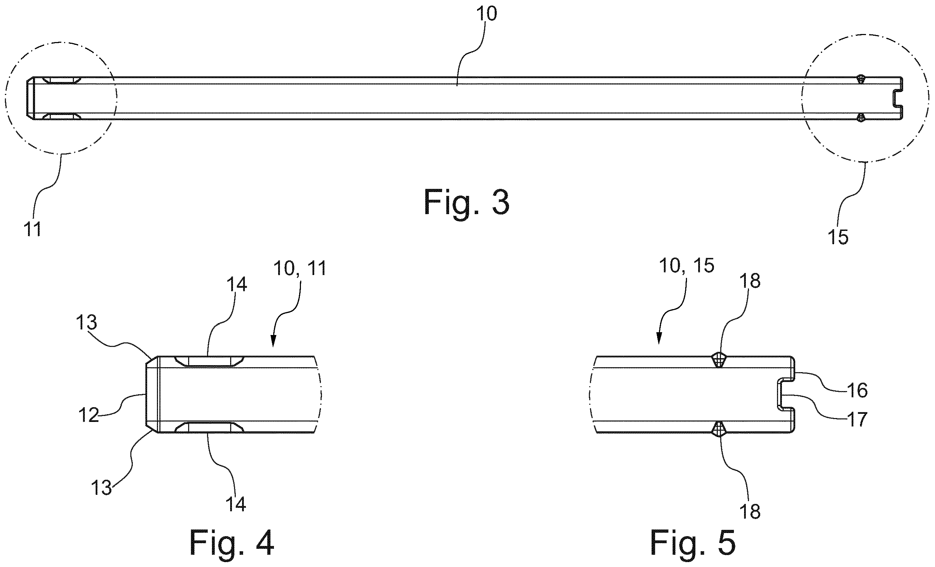

Figure 3 illustrates one of the equally designed spacers 10 inserted into the slots 21 of the stator 20 in a side perspective view. The spacer 10 comprises two end portions 11, 15, namely the first end portion 11 and the second end portion 15. A detailed view of the first end portion 11 is shown in Fig. 4, whereas a detailed view of the second end portion 15 is shown in Fig. 5.

As may be seen in Fig. 4, the spacer 10 has a first end 12 in its first end portion 11 and this first end 12 is chamfered with chamfers 13. The spacer 10 further, in its first end portion 11, comprises two oppositely of one another arranged guiding bulges 14 configured for guiding the spacer 10 inside the slot 21 during insertion of the spacers 10 into the stator 20 as shown in Fig. 1.

As may be seen in Fig. 5, the spacer 10 has a second end 16, opposite of the first end 12, in its second end portion 15. The second end portion 15 comprises a visual indication in form as a cut-out 17 at the second end 16 indicating that the first end 12 of the spacer 10 is to be inserted first into the slot 21 of the stator 20. The spacer 10 further, in its second end portion 15, comprises two oppositely of one another arranged locking bulges 18 configured for locking the spacer 10 inside the slot 21 by establishing a press-fit with the slot 21.

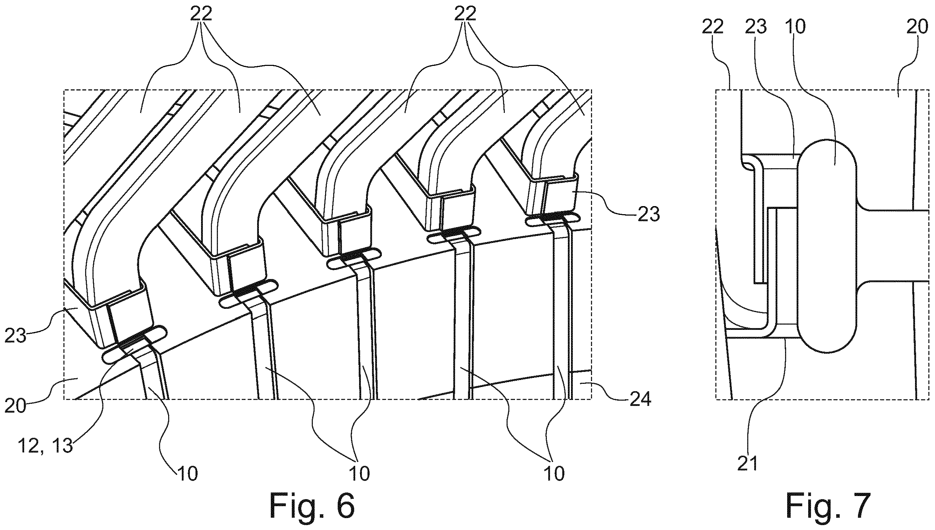

The method 100, after inserting the spacers 10 into the multiple slots 21 as shown in Fig. 1, further comprises arranging a stator winding 22 at least partially inside the slots 21. As may be seen from Fig. 6, illustrating a portion of the stator 20 after the method 100 has been carried out, the stator winding 22 may be arranged together with isolation material 23, such as paper, for example, inside the slots 21. Also, the stator winding 22 may comprise multiple hairpins, several of which are inserted into each one of the slots 21.

Fig. 6 shows the assembly of the stator 20 after the further steps of method 100, namely filling the slots 21 with the therein inserted spacers 10 and at least partially arranged stator winding with a resin material and curing the resin material, have been carried out. The filled material fills the gaps between the hairpins, spacers 10, isolation material 23 and the stator 20 inside the slot 21. Due to the press-fit between the locking bulges 18 and the stator 20, these areas are the only ones in which less or no resin material may have been introduced during the filling process. The cured resin material fixates the spacers 10 and hairpins of the stator winding 22 inside the slots 21, thereby preventing movement thereof when later using the stator 20 in the electric motor.

Figure 7 illustrates a top view onto a part of a slot 21 with a hairpin of the stator winding 22, its isolation material 23 and a spacer 10 being inserted into the slot 21. The spacer 10 in this example has a cross-section shape having a rectangular form with rounded short sides. In other words, the cross-section shape of the spacer 10 may be described as rectangular with rounded corners. This shape has been found to be particularly useful for wedging the spacer 10 between the hairpins of the stator winding 20 inside the slot 21 and the inner side 24 of the stator 20.

By spacing or, in other words, moving away the hairpins of the stator winding 22 from the inner side 24 via the spacers 10, the temperature of the stator winding 22 in operation of the stator in the electric motor are significantly reduced. A further advantage of the spacers 10 is that the filling with the resin material is improved by reducing the size of empty space inside the slot 21, thereby making it difficult for resin material to leak out of the slots 21 before curing. The chamfers 13, the guiding bulges 14, the cut-out 17 and the locking bulges 18 make the step of inserting the spacers 10 into the slots 21 particularly easy and flawless. By designing the spacer 10 as an injection molded part made from fiber-reinforced plastic material and non-magnetic, the spacer 10 is a particularly safe and cost-effective measure for temperature reduction at the stator winding 22, which does not interfere with the operation of the stator 20.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. Any reference signs in the claims should not be construed as limiting the scope of the claims.

### LIST OF REFERENCE SIGNS

- 10: spacer
- 11: first end portion
- 12: first end
- 13: chamfer
- 14: guiding bulge
- 15: second end portion
- 16: second end
- 17: cut-out
- 18: locking bulge
- 20: stator
- 21: slot
- 22: stator winding
- 23: isolation material
- 24: inner side
- 25: outer side
- 100: method

## Claims

1. A spacer (10) for a stator (20) for an electric motor of a vehicle, the spacer (20) being configured to be inserted into a slot (21) of the stator (20) and adjacent to a stator winding (22) at least partially inserted into the slot (21), the spacer (10) being configured to space away the stator winding (22) from an inner side (24) of the stator (20), the spacer (10) comprising at least one bulge (14, 18) for guiding or locking the spacer (10) inside the slot (21).

2. The spacer (10) of claim 1, at least one of the at least one bulge (14, 18) being a locking bulge (18) configured for locking the spacer (10) inside the slot (21) by establishing a press-fit with the slot (21).

3. The spacer (10) of claim 2, the at least one locking bulge (18) being arranged at a second end portion (15) of the spacer (10), the second end portion (15) being located opposite of a first end portion (11) of the spacer (10), the first end portion (11) being configured to be inserted into the slot (21) first.

4. The spacer (10) of claim 2 or 3, the spacer (10) comprising at least two locking bulges (18) arranged opposite of one another.

5. The spacer (10) of any one of the previous claims, at least one of the at least one bulge (14, 18) being a guiding bulge (14) configured for guiding the spacer (10) inside the slot (21).

6. The spacer (10) of claim 5, the at least one guiding bulge (14) being arranged at a first end (12) of the spacer, the first end (12) being configured to be inserted into the slot (21) first.

7. The spacer (10) of claim 5 or 6, the spacer (10) comprising at least two guiding bulges (14) arranged opposite of one another.

8. The spacer (10) of any one of the previous claims, the spacer (10) comprising a visual indication indicating which one of two ends (12, 16) of the spacer (10) is to be inserted first into the slot (21).

9. The spacer (10) of claim 8, the visual indication being configured as a cut-out (17) at one of the two ends (12, 16) of the spacer (10).

10. The spacer (10) of any one of the previous claims, one end (12) of the spacer (10) being chamfered.

11. The spacer (10) of any one of the previous claims, the spacer (10) being an injection molded part.

12. The spacer (10) of any one of the previous claims, the spacer (10) being made from fiber-reinforced plastic material.

13. A stator (20) for an electric motor of a vehicle, the stator (20) comprising an inner side (24), an outer side (25), multiple slots (21) at the inner side (24), and a stator winding (22) at least partially arranged inside the slots (21), the stator (20) further comprising spacers (10) according to any one of the previous claims, each one of the spacers (10) being inserted into one of the multiple slots (21).

14. The stator (20) of claim 13, the spacers (10) and stator winding (22) at least partially being fixed inside the slots (21) by a cured resin material inside the slots (21).

15. A method (100) for manufacturing a stator (20) according to claim 14, the method comprising:
- inserting each one of the spacers (10) into one of the multiple slots (21) inside the stator (20),
- arranging the stator winding (22) at least partially inside the slots (21),
- filling the slots (21) with the therein inserted spacers (10) and at least partially arranged stator winding (22) with a resin material, and
- curing the resin material.

## Amended claims

### Amended claims in accordance with Rule 137(2) EPC.

1. A spacer (10) for a stator (20) for an electric motor of a vehicle, the spacer (20) being configured to be inserted into a slot (21) of the stator (20) and adjacent to a stator winding (22) at least partially inserted into the slot (21), the spacer (10) being configured to space away the stator winding (22) from an inner side (24) of the stator (20), the spacer (10) comprising at least one bulge (14, 18) for guiding or locking the spacer (10) inside the slot (21), **characterized in that** the spacer (10) comprises a visual indication indicating which one of two ends (12, 16) of the spacer (10) is to be inserted first into the slot (21).

2. The spacer (10) of claim 1, at least one of the at least one bulge (14, 18) being a locking bulge (18) configured for locking the spacer (10) inside the slot (21) by establishing a press-fit with the slot (21).

3. The spacer (10) of claim 2, the at least one locking bulge (18) being arranged at a second end portion (15) of the spacer (10), the second end portion (15) being located opposite of a first end portion (11) of the spacer (10), the first end portion (11) being configured to be inserted into the slot (21) first.

4. The spacer (10) of claim 2 or 3, the spacer (10) comprising at least two locking bulges (18) arranged opposite of one another.

5. The spacer (10) of any one of the previous claims, at least one of the at least one bulge (14, 18) being a guiding bulge (14) configured for guiding the spacer (10) inside the slot (21).

6. The spacer (10) of claim 5, the at least one guiding bulge (14) being arranged at a first end (12) of the spacer, the first end (12) being configured to be inserted into the slot (21) first.

7. The spacer (10) of claim 5 or 6, the spacer (10) comprising at least two guiding bulges (14) arranged opposite of one another.

8. The spacer (10) of any one of the previous claims, the visual indication being configured as a cut-out (17) at one of the two ends (12, 16) of the spacer (10).

9. The spacer (10) of any one of the previous claims, one end (12) of the spacer (10) being chamfered.

10. The spacer (10) of any one of the previous claims, the spacer (10) being an injection molded part.

11. The spacer (10) of any one of the previous claims, the spacer (10) being made from fiber-reinforced plastic material.

12. A stator (20) for an electric motor of a vehicle, the stator (20) comprising an inner side (24), an outer side (25), multiple slots (21) at the inner side (24), and a stator winding (22) at least partially arranged inside the slots (21), the stator (20) further comprising spacers (10) according to any one of the previous claims, each one of the spacers (10) being inserted into one of the multiple slots (21).

13. The stator (20) of claim 12, the spacers (10) and stator winding (22) at least partially being fixed inside the slots (21) by a cured resin material inside the slots (21).

14. A method (100) for manufacturing a stator (20) according to claim 13, the method comprising:
- inserting each one of the spacers (10) into one of the multiple slots (21) inside the stator (20),
- arranging the stator winding (22) at least partially inside the slots (21),
- filling the slots (21) with the therein inserted spacers (10) and at least partially arranged stator winding (22) with a resin material, and
- curing the resin material.
